# EUROPEAN PATENT APPLICATION

(11) **EP 4 822 799 A1**
(43) Date of publication of application: **14.10.2026**
(21) Application number: 26169491.3
(22) Date of filing: 31.03.2026
(51) Int. Cl.: H01M 10/0525, H01M 10/056, H01M 50/446, H01M 50/403

(54) **ELECTROLYTE MEMBRANE AND PREPARATION METHOD THEREOF**

(30) Priority: 31.03.2025 CN 202510396335
(71) Applicant: Hon Hai Precision Industry Co., Ltd., New Taipei 236 (TW); SolidEdge Solution Inc., Hsinchu 300 (TW)
(72) Inventor: KAO, JING-KAI, 300 Hsinchu City (TW); CHANG, TSENG-LUNG, 300 Hsinchu City (TW)
(74) Representative: Metida

(57) **Abstract**

The present invention relates to an electrolyte membrane and a preparation method thereof. The preparation method includes the following steps: mixing a first polymer, an ionic liquid, and an organic solvent to obtain a first solution; adding a solid electrolyte to the first solution to obtain a slurry A; mixing second polymers having different weight average molecular weights to obtain a polymer mixture, and mixing the polymer mixture, the ionic liquid, and the organic solvent to obtain a colloidal liquid B; mixing the slurry A and the colloidal liquid B to obtain an intermediate colloid C; mixing a lithium salt and the ionic liquid with the organic solvent to obtain a composite solution; mixing the intermediate colloid C with the composite solution and stirring to obtain a composite; applying the composite onto a substrate and drying the composite.

## Description

### CROSS-REFERENCE TO RELATED APPLICATION

The present application claims the benefit and priority to Chinese Patent Application Serial No. 202510396335.8, filed on March 31, 2025, in CNIPA.

### FIELD

The subject matter herein generally relates to batteries, and more particularly, to an electrolyte membrane and a preparation method of the electrolyte membrane.

### BACKGROUND

With the growth of market demand, requirements for lithium-ion batteries in terms of energy density, rate performance, and cycle life are becoming increasingly stringent. High energy-density materials may also have characteristics such as high specific surface area or high activity, making such materials possible to react with other components in the battery system. Therefore, it is needed to replace the electrolyte with solid electrolyte materials into the battery to improve the safety of the battery.

However, the existing solid-state electrolyte membranes may have excessive thickness, high brittleness and susceptibility to cracking, poor ionic conductivity, insufficient toughness, inadequate resistance to lithium dendrites, and low production yield.

Therefore, there is room for improvement in the art.

### SUMMARY

The purpose of the present disclosure is to provide a fluorescent ceramic, a method for preparing the fluorescent ceramic, and a light-emitting device to solve at least one of the shortcomings mentioned above.

A preparation method of an electrolyte membrane is provided according to an embodiment of the present disclosure. The preparation method includes:
mix a first polymer, an ionic liquid, and an organic solvent to obtain a first solution;
add solid electrolyte to the first solution to obtain a slurry A;
mix at least one type of second polymers to obtain a polymer mixture, wherein a weight-average molecular weight of each of the at least one type of second polymers is different from each other; mixing the polymer mixture, the ionic liquid, and the organic solvent to obtain colloid liquid B;
divide the slurry A into partial batches and adding each of the partial batches of the slurry A to the colloid liquid B to obtain an intermediate colloid C; wherein a mixture of the slurry A and the colloid liquid B is stirred for a period of time after each of the partial batches of the slurry A is added to the colloid liquid B, and a pH of the mixture of the slurry A and the colloid liquid B is maintained to be 6.8 to 7.5;
mix lithium salt and the ionic liquid with the organic solvent to obtain a composite solution;
mix the intermediate colloid C with the composite solution to obtain a composite; and
apply the composite onto a substrate and drying the composite to form the electrolyte membrane.

An electrolyte membrane prepared by the preparation method of the electrolyte membrane is provided according to an embodiment of the present disclosure.

Compared to related arts, the electrolyte membrane prepared by the preparation method of the electrolyte membrane exhibits good ionic conductivity, toughness, and mechanical stability, sufficient to resist dendrite formation. Furthermore, the preparation method is simple and suitable for large-scale production.

### BRIEF DESCRIPTION OF THE DRAWINGS

Implementations of the present disclosure will now be described, by way of embodiments only, with reference to the attached figures.
FIG. 1 is a flowchart of an embodiment of a preparation method of an electrolyte membrane according to the present disclosure.
FIG. 2 is a diagram showing slurry mixing process for slurry A according to an embodiment of the present disclosure.
FIG. 3 is a diagram of a grinder used in the present disclosure.
FIG. 4 is a particle size distribution diagram of the slurry A obtained after grinding by the grinder of FIG. 3.

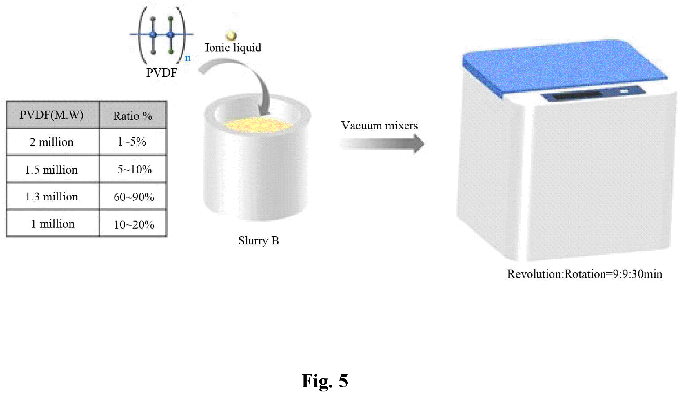

FIG. 5 is a diagram showing preparation of colloid liquid B according to an embodiment of the present disclosure.
FIG. 6 is a diagram showing slurry mixing process during the preparation of the electrolyte membrane according to an embodiment of the present disclosure.
FIG. 7 is a diagram showing interactions between ionic liquid and solid electrolyte in a composite according to an embodiment of the present disclosure.
FIG. 8 is a roll-to-roll (RTR) diagram of coating the composite onto a substrate according to an embodiment of the present disclosure.
FIG. 9 shows P-S test curves for an electrolyte membrane with ionic liquid and an electrolyte membrane without ionic liquid.

### DETAILED DESCRIPTION

Unless otherwise defined, all technical and scientific terms used herein have the same meaning as commonly understood by persons skill in the art. The terms used herein are only for the purpose of describing specific embodiments, and not intended to limit the embodiments of the present application.

Furthermore, singular expressions include plural expressions unless the context clearly indicates otherwise. In the present application, terms such as "comprising" or "having" indicate the existence of stated features, integers, steps, operations, elements, and/or components, and do not preclude the existence or addition of one or more other features, integers, steps, operations, elements, components, and/or groups thereof.

Moreover, numerical values stated herein include those within a permissible deviation range determined by one of ordinary skill in the art, taking into account errors related to measuring the specific quantity (e.g., limitations of the measurement system). For example, it may mean within one or more standard deviations of the stated value, or within 20%, 10%, or 5%.

Some embodiments of the present application will be described in detail below with reference to the drawings. The following embodiments and features of the embodiments may be combined with each other in the absence of conflict.

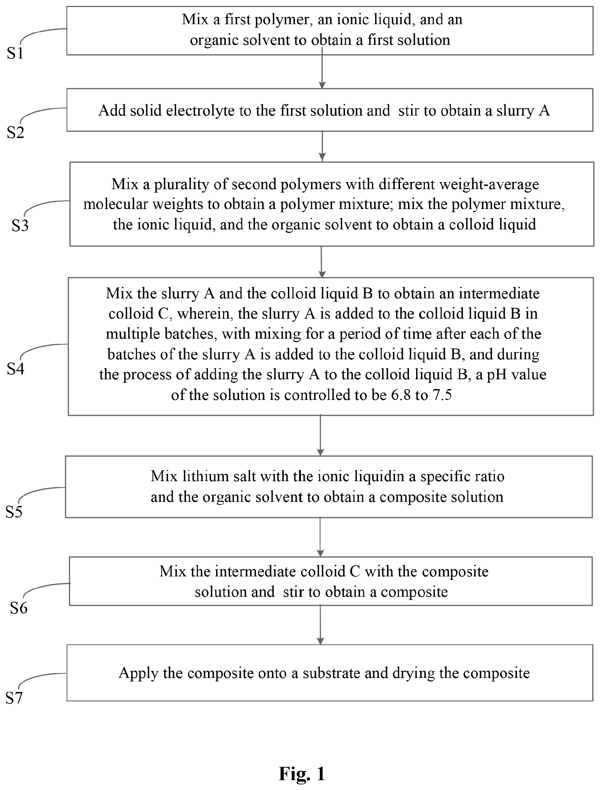

FIG. 1 illustrates a flowchart of a preparation method of an electrolyte membrane in accordance with an embodiment. The method is provided by way of embodiments, as there are a variety of ways to carry out the method. Each block shown in FIG. 1 represents one or more processes, methods, or subroutines carried out in the method. Furthermore, the illustrated order of blocks can be changed. Additional blocks may be added or fewer blocks may be utilized, without departing from this disclosure. The method can begin at S1.
S1, a first polymer, an ionic liquid, and an organic solvent are mixed to obtain a first solution;
S2, a solid electrolyte is added to the first solution and stirred to obtain a slurry A;
S3, at least one type of second polymers are mixed to obtain a polymer mixture , and the polymer mixture, the ionic liquid, and the organic solvent are mixed to obtain a colloid liquid B; wherein a weight-average molecular weight of each of the at least one type of second polymers is different from each other
S4, the slurry A is divided into partial batches and added each of the partial batches of the slurry A to the colloid liquid B to obtain an intermediate colloid C, wherein a mixture of the slurry A and the colloid liquid B is stirred for a period of time after each of the partial batches of the slurry A is added to the colloid liquid B, and the pH of the mixture of the slurry A and the colloid liquid B is controlled within the range of 6.8 to 7.5;
S5, lithium salt, the ionic liquid, and the organic solvent are mixed to obtain a composite solution;
S6, the intermediate colloid C and the composite solution are mixed to obtain a composite;
S7: the composite is applied onto a substrate and subjected to a drying treatment.

In S1, the first polymer may be a high molecular weight polymer or a low molecular weight polymer with a molecular weight between 10,000 and 300,000. For example, the first polymer may be polyvinylidene fluoride (PVDF), poly(vinylidene fluoride-co-hexafluoropropylene) (PVDF-HFP), polyvinyl alcohol (PVA), polylactic acid (PLA), polyethylene glycol (PEG), polymethyl methacrylate (PMMA), propylene glycol monomethyl ether acetate (PMA), polyacrylic acid (PAA), or combinations thereof. The ionic liquid is an ionic compound that exists in a liquid state at or near room temperature (typically below 100 °C), mainly composed of charged ions and transient ion pairs, and is a liquid salt at room temperature. The organic solvent is a solvent capable of dissolving compounds with high molecular weight. For example, the organic solvent may be N,N-dimethylacetamide (DMAC), N-methyl-2-pyrrolidone (NMP), or N,N-dimethylformamide (DMF), or combinations thereof.

In at least one embodiment, the first polymer is a mixture of PVDF and PMMA, the ionic liquid is 1-ethyl-3-methylimidazolium bis(trifluoromethylsulfonyl)imide (EMITFSI), and the organic solvent is DMAC. In the first solution, the mass percentage of PVDF ranging from 1% to 3%, the mass of PMMA is 10% to 50% of the mass of PVDF, the mass percentage of the ionic liquid is 0.2%, and the rest is DMAC.

In S2, the solid electrolyte may be lithium lanthanum zirconium oxide (LLZO), tantalum-doped lithium lanthanum zirconium oxide (LLZTO), lithium aluminum titanium phosphate (LATP), or combinations thereof. The mass ratio of the solid electrolyte to the first solution is 1% to 20%.

In at least one embodiment, the solid electrolyte is LLZO. LLZO is added to the first solution, and the mixture is injected into a grinder containing zirconia beads for grinding at a rotational speed of 2400 rpm for a duration ranging from 1 hour to 5 hours. The filling amount of the zirconia beads is 1.5 kg, and the material temperature in the grinder is controlled below 30°C. An inert gas (e.g., which may be, but is not limited to, nitrogen or the like) is introduced throughout the entire grinding process to eliminate oxygen or moisture present in the air.

In S3, the second polymer may be a polymer with a molecular weight between 600,000 and 2,000,000, such as PVDF, polyacrylonitrile (PAN), and polyethylene oxide (PEO).

In at least one embodiment, the polymer mixture is a mixture of four PVDFs having different weight average molecular weights. The four PVDFs have molecular weights of 2 million, 1.5 million, 1.3 million, and 1 million, respectively, and are present in a mass ratio of (1%~5%) : (5%~10%) : (60%~90%) : (10%~20%).

Furthermore, the polymer mixture (powder) is mixed with DMAC (solvent) containing 0.1% ionic liquid, at a mass ratio of the polymer mixture to the solvent (formed by ionic liquid and DMAC) ranging from 0.2 to 0.35. The term "DMAC containing 0.1% ionic liquid" refers to a solvent formed by mixing the ionic liquid with DMAC, wherein the mass ratio of the ionic liquid is 0.1%. The polymer mixture, the ionic liquid, and the organic solvent are mixed until homogeneous using a planetary mixer (an equipment that utilizes the principles of planetary revolution and rotation to perform mixing and defoaming). The process is conducted under the following conditions: a temperature of 60°C, a revolution-to-rotation speed ratio of 9:9, and a mixing duration of 30 minutes.

In S4, the slurry A and the colloid liquid B are mixed at a mass ratio of 0.8~1.65.

In at least one embodiment, the slurry A is added to the colloid liquid B in three portions, and homogenized using the planetary mixer. The homogenization is performed under the following conditions: a revolution-to-rotation speed ratio of 9:9, a homogenization duration of approximately 30 minutes after each addition, an overall process temperature controlled at about 60°C, and an overall pH maintained within the range of approximately 6.8 to 7.5.

In S5, the lithium salt may be lithium fluoride (LiF), lithium bis(fluorosulfonyl)imide (LiO₄NS₂F₂, abbreviated as LiFSI), lithium bis(trifluoromethanesulfonyl)imide (LiN(CF₃SO₂)₂, abbreviated as LiTFSI), lithium bis(perfluoroethanesulfonyl)imide (Li(C₂F₅SO₂)₂N, abbreviated as LiBETI), lithium bis(oxalato)borate (LiB(C₂O₄)₂, abbreviated as LiBOB), or combinations thereof. It is understandable that conventional lithium salts used in lithium-ion batteries satisfy the requirements of the present application. The mass of the lithium salt is greater than the mass of the ionic liquid, and the total mass of the lithium salt and the ionic liquid is less than 30% of the mass of the electrolyte membrane.

In S6, in at least one embodiment, the intermediate colloid C is added to the composite solution and mixed using the planetary mixer.

In S7, the material of the substrate is not limited and may be a polymer material, etc. The method of applying the composite onto the substrate is not limited, such as spin coating, spray coating, etc.

In at least one embodiment, the composite is coated onto the substrate using a doctor blade coating method, with a blade gap of 200 µm to 500 µm. The substrate has a water contact angle of 70° to 120° and a thickness of 50 µm to 150 µm.

The drying method is not limited. In at least one embodiment, the substrate coated with the composite is placed in an oven for drying using a three-stage baking process. In the first stage, the heating temperature is between 80°C and 110°C, with the oven's blower set at an intake air volume frequency of 30 Hz and an exhaust air volume frequency of 25 Hz. In the second stage, which serves as the initial solvent evaporation phase, the heating temperature is between 130°C and 150°C, with the blower set at an intake air volume frequency of 30 Hz and an exhaust air volume frequency of 25 Hz. In the third stage, the heating temperature is between 130°C and 150°C, with the blower set at an intake air volume frequency of 43 Hz and an exhaust air volume frequency of 25 Hz. A higher blower frequency corresponds to a greater air volume, which influences the solvent concentration within the oven and the efficiency of solvent evaporation.

In some embodiments, the preparation method of the electrolyte membrane may further comprise a step S8 of applying a release film onto the surface of the electrolyte membrane away from the substrate, facilitating subsequent transportation and use of the electrolyte membrane.

In at least one embodiment, the release is attached to the surface of the electrolyte membrane away from the substrate. The release film has a water contact angle of 70° to 120° and a thickness of 10 µm to 80 µm. Finally, an electrolyte membrane with a thickness of 150 µm to 200 µm is obtained, exhibiting an elongation of 30% to 40% and a maximum tensile stress of 6 MPa to 12 MPa.

The preparation method of the electrolyte membrane is described below using a specific embodiment, but is not limited thereto.

### Example 1

S1, 3 parts of PVDF (first polymer) with a molecular weight of 1.3 million by weight, 1.5 parts of PMMA (first polymer) by weight, and 0.2 parts of EMITFSI (ionic liquid) by weight were added into 95.3 parts of DMAC (organic solvent) by weight to obtain a first solution.

S2, 15 parts of LLZO (solid electrolyte) in powder form were mixed into the first solution. Specifically, pre-mix uniformly using an emulsifying homogenizer for 15 minutes, then stir using a planetary mixer. Finally, the mixed liquid was introduced into a grinder containing zirconia beads and ground at a rotational speed of 2400 rpm for a duration of 5 hours. The filling amount of the zirconia beads was 1.5 kg, the material temperature in the grinder was controlled below 30°C, and the entire process was assisted with nitrogen sealing protection. Thereby, a homogenized slurry A was obtained, wherein 50% of the particle size was less than 100 nm (D50<100nm) and 90% of the particle size was less than 150 nm (D90<150nm).

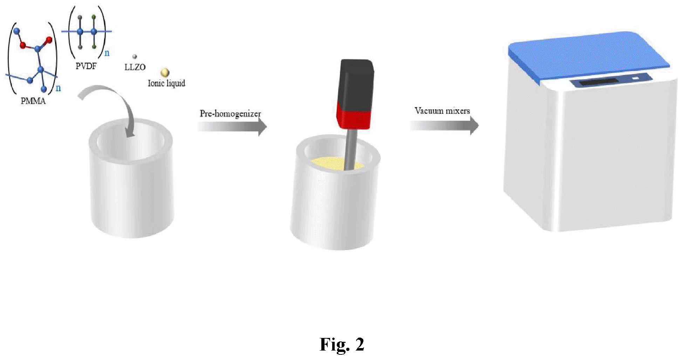

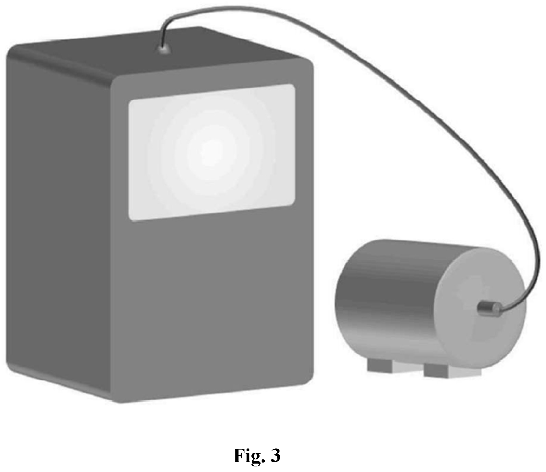

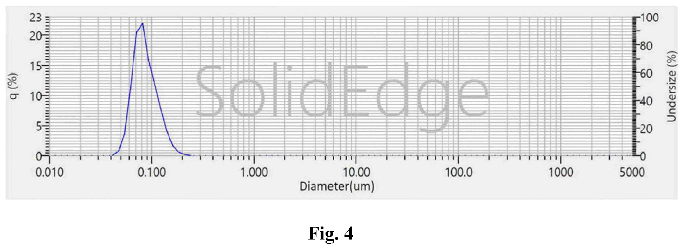

FIG. 2 shows the slurry mixing process for slurry A. FIG. 3 shows the diagram of the grinder. FIG. 4 shows the particle size analysis diagram of the slurry A obtained after grinding (nano-microization) by the grinder, wherein D50<100nm, D90<150nm, indicating that slurry A is a homogenized slurry.

S3, four PVDFs with different weight-average molecular weights were mixed to obtain the polymer mixture. The molecular weights of these four PVDFs are 2 million, 1.5 million, 1.3 million, and 1 million, respectively, and the mass ratio of these four PVDFs is 3% : 8% : 75%: 14%. That is, the mass ratio of PVDF with molecular weight of 2 million is 3%, the mass ratio of PVDF with molecular weight of 1.5 million is 8%, the mass ratio of PVDF with molecular weight of 1.3 million is 78%, and the mass ratio of PVDF with molecular weight of 1 million is 14%. Then, the polymer mixture (powder) was mixed with DMAC (solvent) containing 0.1% ionic liquid, and the mass ratio of powder to solvent was 0.30. The term "DMAC containing 0.1% ionic liquid" refers to a solvent formed by mixing the ionic liquid with DMAC, wherein the mass ratio of the ionic liquid was 0.1%. The polymer mixture and DMAC containing 0.1% ionic liquid were mixed until homogeneous using the planetary mixer under conditions of a revolution-to-rotation speed ratio of 9:9 and a mixing duration of 30 minutes, thereby obtaining the colloidal liquid B.

S4, the slurry A and the colloid liquid B were mixed at a mass ratio of 1.25. Specifically, the slurry A was added to the colloid liquid B in three portions, with each mixing time being 30 min. The pH of the entire solution must be controlled at 6.8~7.5, and the temperature was controlled at 60°C throughout, to obtain the intermediate colloid C.

S5, DMAC (organic solvent), EMITFSI (ionic liquid), and LiTFSI (lithium salt) were mixed to obtain the composite solution. The mass ratio of LiTFSI to ionic liquid is 3:4, and the total mass of LiTFSI and the ionic liquid is controlled to be less than 30% of the mass of the electrolyte membrane.

S6, the composite solution was added to the intermediate colloid C and mixed using the planetary mixer to obtain the composite.

S7, the composite was applied onto the substrate using a doctor blade coating method (blade gap 200 µm to 500 µm). The substrate has a water contact angle of 70° to 120° and a thickness of 50 µm to 150 µm. Then, the substrate coated with the composite was dried using a three-stage baking process to obtain the electrolyte membrane. The three-stage baking process is: the first stage: heating temperature 80°C to 110°C, air intake at 30 (Hz), air exhaust at 25 (Hz); the second stage: preliminary solvent evaporation, heating temperature 130°C to 150°C, air intake at 30 (Hz), air exhaust at 25 (Hz); the third stage: heating temperature 150°C to 180°C, air intake at 43 (Hz), air exhaust at 25 (Hz).

S8, a release film is attached onto the surface of the electrolyte membrane (the release film has a water contact angle of 70° to 120° and a thickness of 10 µm to 80 µm) to obtain a membrane sheet with a thickness between 150 µm and 200 µm (elongation at break 30% to 40%, maximum tensile stress 6 MPa to 12 MPa).

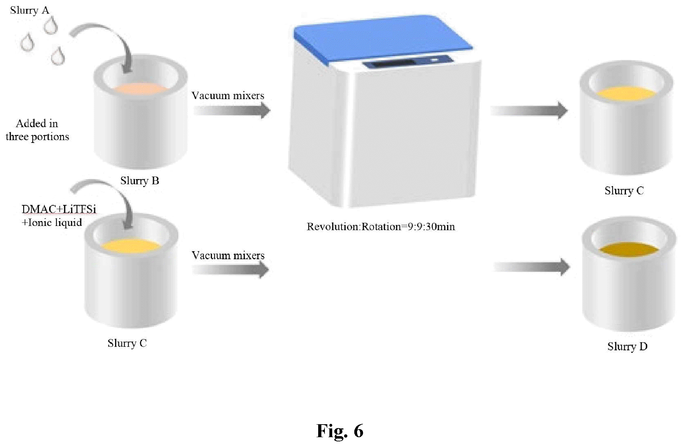

FIG. 6 is a diagram showing slurry mixing process during the preparation of the electrolyte membrane. That is, FIG. 6 illustrates the process from S4 to S6. It can be seen from FIG. 6 that the slurry A was added to the colloid liquid B in three portions and mixed until uniform using the planetary mixer to form the intermediate colloid C (revolution:rotation = 9:9, 30 min is the process time for each slurry addition, during which the pH must be controlled at 6.8-7.5). Then, after mixing DMAC, ionic liquid, and LiTFSI, add the intermediate colloid C to the mixture to and mix until uniform using the planetary mixer to form the composite from S6.

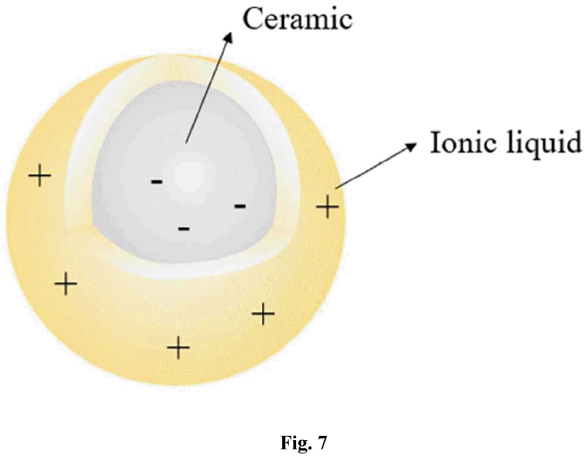

FIG. 7 is a diagram showing the interaction between the ionic liquid and solid electrolyte in the composite. LLZO powder carries negative charge in the DMAC solvent, while the ionic liquid carries positive charge. The positive and negative charges attract each other, causing the ionic liquid to coat the surface of the LLZO powder. This allows the LLZO powder surface to carry positive charge, preventing secondary agglomeration of the LLZO powder. After membrane formation, the LLZO powder is uniformly distributed within the electrolyte membrane, improving the ionic conductivity and mechanical stability of the electrolyte membrane.

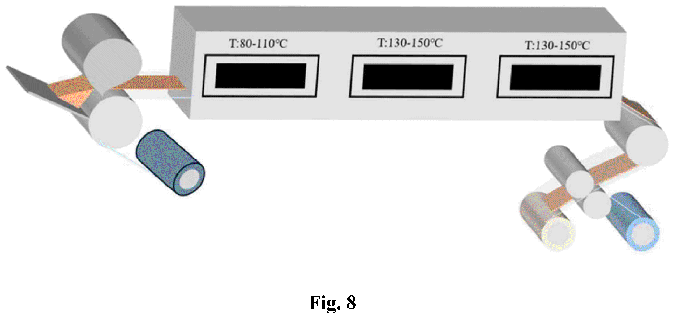

FIG. 8 is a roll-to-roll (RTR) diagram of coating the composite onto the substrate. It can be seen from FIG. 8 that the composite is coated onto the substrate using a doctor blade coating method and dried using a three-stage baking process.

The electrolyte membrane of Example 1 is one with ionic liquid added. Furthermore, for comparison, a Comparative Example is provided, i.e., an electrolyte membrane without ionic liquid added. This electrolyte membrane does not have ionic liquid added in any step of its preparation process.

### Comparative Example 1

The Comparative Example 1 differs from the Example 1 in that no ionic liquid is added in S1, S3, and S5. All other conditions are the same as those in the Example 1, and thus are not repeated herein.

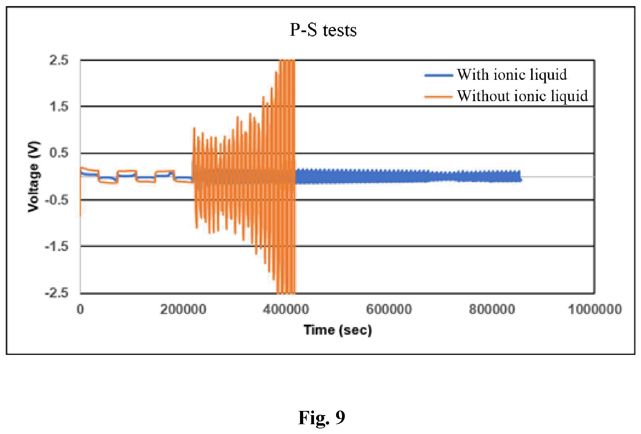

The electrolyte membranes prepared in Example 1 and Comparative Example 1 were subjected to P-S testing, yielding the P-S test curves shown in FIG. 9. The test conditions for the initial part of the curve were: charging at a current density of 0.5 mA/cm² for 1 hour, stopping for 10 minutes, then discharging for 1 hour, cycling for 3 cycles. The test conditions for the latter part of the curve were: charging at a current density of 1.25 mA/cm² for 1 hour, stopping for 10 minutes, then discharging for 1 hour, performing cycle testing. Specific test results are shown in FIG. 9. It can be clearly seen from FIG. 9 that the electrolyte membrane with ionic liquid added (Example 1) significantly reduces voltage bias and increases the cycle life in lithium metal P-S testing.

The present application also provides an electrolyte membrane prepared by the aforementioned preparation method. The electrolyte membrane is a solid electrolyte membrane suitable for use in lithium-ion batteries, etc.

The present application also provides a battery including the aforementioned electrolyte membrane. The battery may be, but is not limited to, a lithium-ion battery.

The electrolyte membrane and its preparation method have the following advantages. The electrolyte membrane prepared by the method provided in the present application exhibits good ionic conductivity, toughness, and mechanical stability, sufficient to resist dendrite formation. The solid electrolyte membrane without ionic liquid added (Comparative Example 1) has an ionic conductivity of about 10⁻⁵ S/cm, and film elongation is unstable, ranging between 10% and 50%. The solid electrolyte membrane with ionic liquid added (Example 1) has an ionic conductivity increased to 10⁻⁴ S/cm. Because the solid electrolyte powder is uniformly distributed within the electrolyte membrane, film elongation is stable, ranging between 30% and 40%. The preparation method is simple and suitable for large-scale production.

The above descriptions are some specific embodiments of the present application, but the actual application process cannot be limited only to these embodiments. For those of ordinary skill in the art, other modifications and changes made according to the technical concept of the present application should all belong to the protection scope of the present application.

## Claims

1. A preparation method of an electrolyte membrane, **characterized by** comprising:
mixing a first polymer, an ionic liquid, and an organic solvent to obtain a first solution;
adding solid electrolyte to the first solution to obtain a slurry A;
mixing at least one type of second polymers to obtain a polymer mixture, wherein a weight-average molecular weight of each of the at least one type of second polymers is different from each other; mixing the polymer mixture, the ionic liquid, and the organic solvent to obtain colloid liquid B;
dividing the slurry A into partial batches and adding each of the partial batches of the slurry A to the colloid liquid B to obtain an intermediate colloid C; wherein a mixture of the slurry A and the colloid liquid B is stirred for a period of time after each of the partial batches of the slurry A is added to the colloid liquid B, and a pH value of the mixture of the slurry A and the colloid liquid B is maintained to be 6.8 to 7.5;
mixing lithium salt and the ionic liquid with the organic solvent to obtain a composite solution;
mixing the intermediate colloid C with the composite solution to obtain a composite; and
applying the composite onto a substrate and drying the composite to form the electrolyte membrane.

2. The preparation method of claim 1, **characterized in that**, the first polymer is selected from a group consisting of polyvinylidene fluoride, poly(vinylidene fluoride-co-hexafluoropropylene), polyvinyl alcohol, polylactic acid, polyethylene glycol, polymethyl methacrylate, propylene glycol methyl ether acetate, and polyacrylic acid, and any combination thereof.

3. The preparation method of claim 2, **characterized in that**, the first polymer is a mixture of the polyvinylidene fluoride and the polymethyl methacrylate.

4. The preparation method of any one of claims 1 to 3, **characterized in that**, the organic solvent is selected from a group consisting of N,N-dimethylacetamide, N-methyl-2-pyrrolidone, and N,N-dimethylformamide, and any combination thereof;
the lithium salt is selected from a group consisting of lithium fluoride, lithium bis(fluorosulfonyl)imide, lithium bis(trifluoromethanesulfonyl)imide, lithium bis(perfluoroethanesulfonyl)imide, and lithium bis(oxalato)borate, and any combination thereof.

5. The preparation method of any one of claims 1 to 4, **characterized in that**, the solid electrolyte comprises a material selected from a group consisting of lanthanum zirconium oxide, tantalum-doped lithium lanthanum zirconium oxide, and lithium aluminum titanium phosphate, and any combination thereof.

6. The preparation method of any one of claims 1 to 5, **characterized in that**, a mass ratio of the solid electrolyte to the first solution is 1 % to 20 %.

7. The preparation method of any one of claims 1 to 6, **characterized in that**, the at least one type of second polymers are selected from a group consisting of types of polyvinylidene fluoride, types of polyacrylonitrile, and types of polyethylene oxide.

8. The preparation method of claim 7, **characterized in that**, the at least one type of second polymers is a mixture of four types of polyvinylidene fluorides, the four types of polyvinylidene fluorides have molecular weights of 2 million, 1.5 million, 1.3 million, and 1 million, respectively, and are in a mass ratio of (1 %~5 %) : (5 %~10 %) : (60 %~ 90 %) : (10 %~20 %).

9. The preparation method of any one of claims 1 to 8, **characterized in that**, the polymer mixture is further mixed with N,N-dimethylacetamide containing 0.1 wt. % ionic liquid at a mass ratio ranging from 0.2 to 0.35.

10. The preparation method of any one of claims 1 to 9, **characterized in that**, the slurry A and the colloid liquid B are mixed at a mass ratio of 0.8~1.65.

11. The preparation method of any one of claims 1 to 10, **characterized in that**, mixing the lithium salt and the ionic liquid with the organic solvent further comprises controlling a mass of the lithium salt greater than a mass of the ionic liquid, and a total mass of the lithium salt and the ionic liquid less than 30 % of a mass of the electrolyte membrane.

12. The preparation method of any one of claims 1 to 11, **characterized in that**, the composite is coated onto the substrate by blade coating, and a blade gap is in a range of 200 µm to 500 µm, and the substrate has a water contact angle of 70 ° to 120 ° and a thickness of 50 µm to 150 µm.

13. The preparation method of any one of claims 1 to 12, **characterized in that**, drying the composite to form the electrolyte membrane comprises drying the composite in a first drying stage, a second drying stage, and a third drying stage sequentially, wherein a heating temperature of the first drying stage is controlled in a range of 80 °C to 110 °C, a heating temperature of the second drying stage is controlled in a range of 130 °C to 150 °C, and a heating temperature of the third drying stage is controlled in a range of 150 °C to 180 °C.

14. The preparation method of any one of claims 1 to 13, **characterized in that**, further comprising:
applying a release film onto a surface of the electrolyte membrane away from the substrate, and the release film has a water contact angle of 70 ° to 120 ° and a thickness of 10 µm to 80 µm.

15. An electrolyte membrane, **characterized by** preparing by the preparation method of any one of claims 1 to 14.
